# FASCICULE DE BREVET EUROPEEN

(11) **EP 1 931 559 B1**
(45) Date de publication et mention de la délivrance du brevet: **06.06.2012**
(21) Numéro de dépôt: 06808231.2
(22) Date de dépôt: 03.10.2006
(51) Int. Cl.: B62K 3/10, B62K 13/00

(54) **BICYCLETTE A LONGUEUR DE CADRE AJUSTABLE**
FAHRRAD MIT ENSTELLBAREM RAHMEN
ADJUSTABLE FRAME BICYCLE

(30) Priorité: 04.10.2005 FR 0510133
(43) Date de publication de la demande: 18.06.2008
(73) Titulaire: DECATHLON, 59650 Villeneuve d'Ascq (FR)
(72) Inventeur: DASSONNEVILLE, Stéphane, F-59700 Marcq en Baroeul (FR); TARRIN, Gilles, F-59800 Lille (FR); DEKNEUVEL, Yann, F-59273 Fretin (FR)
(74) Mandataire: Balesta, Pierre
(86) Numéro de dépôt international: PCT/FR2006/002222
(87) Numéro de publication internationale: WO 2007/039682

(56) Documents cités:
- EP-A- 1 352 821
- DE-A1- 3 724 426
- DE-A1- 19 507 921
- DE-U1- 9 312 325
- US-A- 5 607 171
- US-A- 5 887 882
- US-A1- 2004 094 932
- US-A1- 2004 212 171
- US-A1- 2004 245 743

## Description

La présente invention concerne une bicyclette dont le cadre a une structure conventionnelle mais est réglable en longueur, selon la morphologie de l'utilisateur.

Les fabricants de bicyclettes proposent à leur clientèle une gamme généralement assez limitée de taille de cadre, par exemple cinq à six tailles. Le choix de la taille se détermine à partir de la hauteur d'entrejambe. Une fois la taille du cadre retenue, le réglage précis, en fonction de la morphologie de l'utilisateur, se fait par ajustement de la hauteur de la selle et de la hauteur du guidon. Cependant toutes les personnes ayant la même hauteur d'entrejambe n'ont pas nécessairement la même morphologie en ce qui concerne la hauteur du buste et la longueur des bras. Le cadre peut donc être adapté en ce qui concerne le pédalage proprement dit tout en ne l'étant pas en ce qui concerne l'écartement entre la selle et le guidon. Ceci peut induire un mauvais positionnement de l'utilisateur susceptible de provoquer des douleurs dorsales.

On connaît les documents EP 1 352 821 et DE 37 24 426 qui divulgue une bicyclette permettant d'adapter la longueur de la bicyclette entre le tube de selle et le tube de direction sur lequel est monté le guidon, et ainsi de répondre à différentes morphologies de cyclistes. D'autres document sont certes connus dans le domaine des bicyclettes, notamment les documents US 2004/0245743, US 2004/0094932 et DE 195 07 921, lequel divulgue cependant des bicyclettes dont la conception a pour but de limiter leur encombrement, ces bicyclettes pouvant être disposé soit dans un premier mode rétracté de rangement ou de stockage soit dans un second mode déployé d'utilisation.

L'objet de la présente invention est de mettre en oeuvre une variante de bicyclette permettant de répondre à différentes morphologies de cycliste, tout comme les bicyclettes décrites dans les documents EP 1 352 821 et notamment DE 37 24 426, qui décrit l'état de la technique le plus proche.

A ce titre l'invention concerne une bicyclette dont le cadre a une structure conventionnelle en ce qu'il comporte :
a) un tube de direction,
b) un tube de selle, dont l'extrémité inférieure est reliée à la boîte de pédalier,
c) un tube supérieur en deux parties à savoir une partie mâle, de préférence avant, et une partie femelle, de préférence arrière, montées coulissantes l'une par rapport à l'autre sur une longueur limitée, par exemple de 10 cm et
d) un tube diagonal s'étendant entre la boîte de pédalier et la partie femelle arrière du tube supérieur.

De manière caractéristique, selon la présente invention :
- le tube supérieur s'étend strictement entre le tube de direction et le tube de selle et,
- le cadre comprend des moyens de blocage des deux parties mâle et femelle suivant une pluralité de positions déterminées d'utilisation,

la partie mâle et la partie femelle du tube supérieur ayant une section non circulaire et présentant au moins une arête.

Ainsi l'utilisateur peut réaliser l'ajustement de la distance entre la selle et le guidon en réglant la longueur du cadre entre le tube de direction et le tube de selle, grâce à la capacité de coulissement des parties avant et arrière du tube supérieur. Ceci est rendu possible du fait que le tube diagonal n'est pas relié directement au tube de direction mais à la partie arrière du tube supérieur.

Dans une variante de réalisation, le tube supérieur a une section carrée, de préférence avec deux côtés sensiblement verticaux. Cette variante permet de réaliser un positionnement précis des parties avant et arrière du tube supérieur, sans risque de décalage angulaire éventuel entre lesdites parties, ce qui pourrait se produire dans le cas d'une section circulaire.

De préférence, les moyens de blocage des deux parties avant et arrière du tube supérieur, dans une position déterminée, comprennent un ergot de positionnement, mû par ressort, monté sur la partie mâle du tube supérieur ainsi qu'une pluralité de trous débouchants formés dans la partie femelle du tube supérieur, dans l'alignement de l'ergot de positionnement. Cette disposition particulière présente différents avantages. Elle permet à l'utilisateur de retrouver facilement le réglage adéquat de la longueur du cadre qui lui convient, en particulier lorsqu'il met à profit le fait que ledit cadre étant en deux parties séparables il est possible de ranger la bicyclette dans un encombrement réduit en désolidarisant les parties avant et arrière du cadre. Lors du remontage de la bicyclette, l'utilisateur peut donc retrouver facilement sa longueur de cadre en faisant pénétrer l'ergot de positionnement dans le trou traversant correspondant. De plus la pénétration de l'ergot de positionnement dans le trou traversant permet d'assurer le blocage longitudinal des deux parties avant et arrière du tube supérieur, empêchant en tout état de cause la partie mâle de sortir de la partie femelle. Enfin l'utilisateur peut identifier de manière sûre que les deux parties avant et arrière sont bloquées, du fait du bruit caractéristique que fait l'ergot lors de son enclenchement et aussi du fait qu'il est visible en position enclenchée.

Dans une variante de réalisation du tube supérieur de section carrée, l'extrémité de la partie femelle du tube supérieur comporte une fente longitudinale de longueur D et est équipée de deux oeillets fixés de part et d'autre de ladite fente. Dans ce cas les moyens de blocage comportent un système de serrage, notamment à came, apte à réaliser le rapprochement des deux oeillets. La fente longitudinale est de préférence formée selon une arête de ladite partie femelle.

Etant donné qu'il existe nécessairement un certain jeu entre les parties mâle et femelle pour permettre leur coulissement réciproque, le rapprochement des deux oeillets a pour but de réduire ce jeu en réduisant la section de la partie femelle grâce au rapprochement des deux bords de la fente.

De préférence, pour que le rapprochement des deux bords de la fente puisse intervenir dans de bonnes conditions, il est préférable que la fente ait une longueur D qui fasse de l'ordre de 4 à 8 cm et une largeur d qui fasse de l'ordre de 5 à 9 mm.

Pour faciliter la capacité de coulissement de la partie mâle dans la partie femelle du tube supérieur, de préférence la partie mâle du tube supérieur présente une surface extérieure à faible coefficient de frottement, par exemple étant en acier chromé.

Par ailleurs il importe que le tube supérieur, bien qu'étant en deux parties, puisse conférer au cadre la rigidité qui convient et ce d'autant plus que le tube diagonal, selon la présente invention, n'est pas relié au tube de direction. Pour ce faire, de préférence, la partie mâle du tube supérieur pénètre dans la partie femelle d'une longueur H d'au moins 15 cm. On évite ainsi le risque de rupture du cadre vers l'extrémité avant de la partie femelle du tube supérieur qui pourrait être dû à des forces excessives de flexion ou de torsion sur le tube supérieur lors de l'utilisation de la bicyclette.

De préférence, pour accroître cette rigidité du tube supérieur, celui-ci ayant une section carrée, la longueur d'un des côtés dudit carré de la partie avant est supérieure au diamètre du tube de direction et du tube de selle. Par exemple la longueur du carré est de l'ordre de 3,5 à 4 cm tandis que le diamètre des tubes de direction et de selle fait de l'ordre de 3 cm.

Dans un cadre de bicyclette conventionnel, le tube supérieur relie le tube de direction à sa partie supérieure et le tube de selle, également à sa partie supérieure au niveau des deux haubans arrière. Dans le cadre de la présente invention, la partie avant du tube supérieur est reliée au tube de direction dans sa portion médiane, voire inférieure tandis que la partie arrière du tube supérieur relie le tube de selle dans une zone située à distance du raccordement des deux haubans arrière, par exemple de l'ordre de 8 à 12 cm.

Dans une variante de réalisation, le tube supérieur est en oblique, étant relevé vers l'avant d'un angle α, faisant de l'ordre de 5 à 15° et de préférence le tube diagonal a une courbure convexe.

La présente invention sera mieux comprise à la lecture de la description qui va être faite d'un exemple préféré de réalisation d'une bicyclette dont le cadre a une structure conventionnelle, notamment en ce qu'il comporte un tube supérieur qui s'étend strictement entre le tube de direction et le tube de selle, contrairement aux documents US.2004/094932 et EP.1.352.821 et qui a une longueur réglable, illustré par le dessin annexé dans lequel :
La figure 1 est une représentation schématique de côté du cadre dont le tube supérieur est formé de deux parties coulissantes et
La figure 2 est une représentation partielle du cadre de la figure 1, au niveau de l'extrémité avant de la partie arrière femelle du tube supérieur, avec son système de serrage.

La particularité de la bicyclette de la présente invention est qu'elle a une longueur de cadre qui est réglable, sur une longueur limitée, selon la morphologie de l'utilisateur.

Le cadre en question 1 a une structure conventionnelle pour un vélo de route, avec un tube de direction 2, un tube de selle 3 dont l'extrémité inférieure 3a est reliée à la boîte de pédalier 4, un tube supérieur 5 qui relie le tube de direction 2 et le tube de selle 3, étant fixé notamment par soudure à chacun de ces tubes, et un tube diagonal 6 dont l'extrémité inférieure 6a est reliée à la boîte de pédalier 4.

De manière caractéristique, d'une part le tube supérieur 5 est constitué de deux parties mâle 7 et femelle 8 indépendantes et aptes à coulisser l'une par rapport à l'autre ; en l'occurrence la partie mâle 7 est la partie avant et la partie femelle 8 est la partie arrière du tube supérieur 5. D'autre part l'extrémité supérieure 6b du tube diagonal 6 est reliée à la partie arrière 8. Enfin le cadre 1 est équipé de moyens de blocage permettant d'assurer le blocage des parties avant 7 et arrière 8 dans une position de coulissement déterminée.

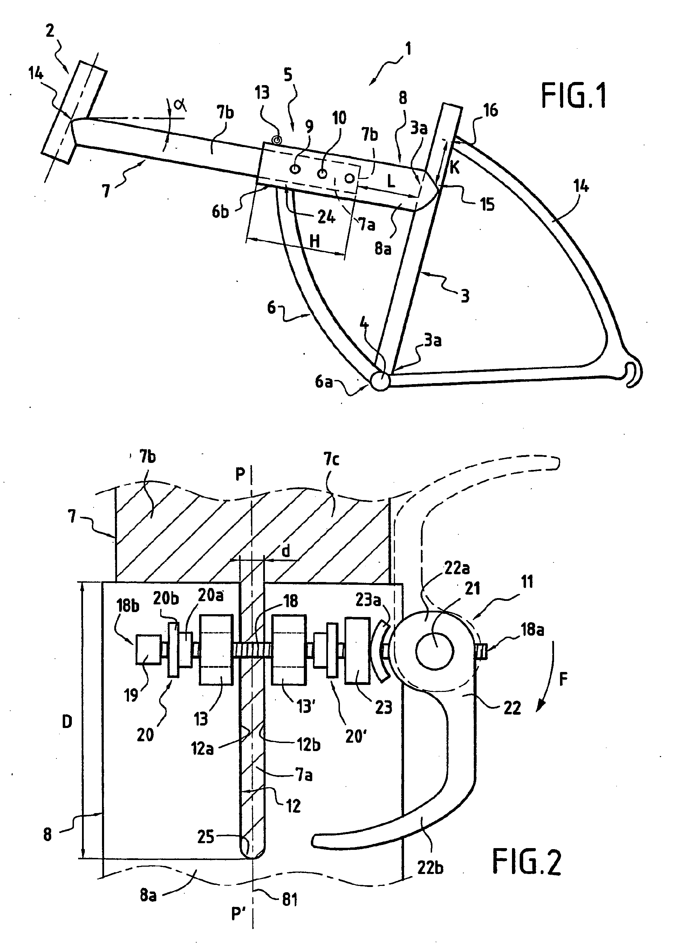

Sur la figure 1, on a représenté en pointillés la partie distale 7a de la partie avant 7 du tube supérieur, partie distale 7a située à l'intérieur de la partie arrière 8 du tube supérieur 5, alors que, dans cette configuration, le cadre est à sa longueur maximale. Il y a donc un chevauchement important des deux parties mâle 7 et femelle 8, sur une longueur H qui peut être de l'ordre de 15 à 20 cm, de manière à assurer une résistance adéquate du tube supérieur aux efforts de flexion.

La capacité de réglage de longueur L du cadre correspond donc, dans cet exemple, à la distance séparant le bord distal 7b de la partie avant 7 et la face extérieure 3a du tube de selle 3, face 3a qui sert éventuellement de butée à la partie avant 7.

Dans la version qui est illustrée à la figure 1, il y a trois positions prédéterminées de réglage de longueur. Ceci est obtenu grâce à un ergot de positionnement 9 qui est monté, avec ressort, sur la partie distale 7a de la partie avant et grâce à une pluralité de trous traversants 10 formés sur la partie arrière 8, dans l'alignement longitudinal de l'ergot 9. Lorsque l'ergot 9 est déplacé jusqu'à l'aplomb d'un trou traversant 10, il pénètre dans ledit trou 10 grâce à l'action du ressort. Il y a alors un blocage en position des deux parties avant 7 et arrière 8 l'une par rapport à l'autre, assurant la longueur de cadre souhaitée. Pour changer le réglage de la longueur de cadre ou éventuellement démonter le cadre en deux parties distinctes, il suffit à l'utilisateur d'appuyer sur l'ergot 9 tout en exerçant une poussée ou traction entre les deux parties avant 7 et arrière 8.

Bien sûr l'utilisateur peut, malgré la présence de l'ergot 9 et des trous débouchants 10, régler la longueur du cadre dans une position intermédiaire s'il le souhaite. Dans ce cas, la présence de l'ergot peut néanmoins s'avérer intéressante pour réaliser le blocage longitudinal de la partie avant 7 en cas de coulissement non souhaité de ladite partie avant par rapport à la partie arrière 8. Le trou débouchant pour le réglage de la longueur minimale du cadre ou un autre trou si besoin - constitue une fenêtre de visualisation de la longueur de la partie distale 7a de la partie avant 7 se chevauchant avec la partie arrière 8.

La seule présence de l'ergot 9 n'est pas suffisante, en pratique, pour obtenir un blocage satisfaisant des deux parties avant 7 et arrière 8 du tube supérieur 5. En effet compte tenu du jeu nécessaire entre ces deux parties pour permettre leur coulissement respectif, il est nécessaire de réaliser un blocage transversal, c'est-à-dire un blocage qui assure l'élimination de ce jeu, faute de quoi lors de l'utilisation de la bicyclette il y aurait des déplacements relatifs des deux parties l'une par rapport à l'autre avec la perte de rigidité et donc de stabilité ainsi que les risques notamment d'usure que cela pourrait engendrer.

Pour éliminer le jeu entre les parties mâle et femelle du tube supérieur 5, le cadre 1 est équipé d'un système de serrage 11, dont un exemple de réalisation est illustré à la figure 2.

L'extrémité avant 8a de la partie arrière 8 comporte une encoche longitudinale 12. Deux oeillets 13, 13' sont fixés en saillie sur ladite partie arrière 8 de part et d'autre de l'encoche 12. L'élimination du jeu permettant le blocage transversal de la partie arrière 8 sur la partie avant 7 est obtenue en rapprochant les deux oeillets 13, 13', provoquant le rapprochement des bords 12a, 12b de l'encoche 12 en sorte de rétrécir la section de passage de l'extrémité avant 8a de la partie arrière 8 du tube supérieur 5.

La longueur D de l'encoche 12 est de l'ordre de 4 à 8 cm, sa largeur d de l'ordre de 5 à 9 mm.

De préférence pour éviter tout risque de pivotement angulaire des deux parties avant 7 et arrière 8, la section des deux dites parties n'est pas circulaire. Dans l'exemple illustré, il s'agit d'une section carrée dont deux côtés sont sensiblement verticaux. L'encoche longitudinale 12 est formée selon une arête ou éventuellement selon l'axe longitudinal médian d'un coté.

La solidarisation des parties avant 7 et arrière 8 respectivement avec le tube de direction 2 et le tube de selle 3 est réalisée par soudure, de manière usuelle. Le tube supérieur 5 est en oblique, avec une inclinaison α par rapport à l'horizontale de l'ordre de 5 à 15°.

La zone de raccordement 14 de la partie avant 7 du tube supérieur 5 avec le tube de direction 2 est située vers la partie médiane dudit tube de direction 2, voire en-dessous de ladite partie médiane. La zone de raccordement 15 de la partie arrière 8 du tube supérieur 7 avec le tube de selle 3 est située en-dessous de la zone de raccordement 16 des haubans arrière 17 avec ledit tube de selle 3. Ces dispositions particulières contribuent à assurer au cadre une rigidité adéquate malgré le fait que le tube diagonal 6 n'est pas relié directement au tube de direction 2 comme c'est le cas dans les cadres de vélos de route conventionnels. De préférence également le tube diagonal 6 est recourbé vers l'avant, avec donc une courbure convexe par rapport au tube de selle 3.

Le système de serrage 11 qui est illustré à la figure 2 permet le rapprochement des deux oeillets 13, 13'. Ce système 11 comporte une tige 18 dont une extrémité 18a est filetée et dont l'autre extrémité 18b comporte une tête de vissage 19. La tige 18 passe à travers les deux oeillets 13, 13'. De part et d'autre des deux oeillets 1.3, 13' sont disposées des bagues de protection 20, 20' qui comportent, chacune, une portion cylindrique 20a destinée à venir se loger dans l'évidement de l'oeillet 13, 13' correspondant, ladite portion cylindrique étant terminée par une collerette annulaire 20b destinée à venir en appui sur la face extérieure de l'oeillet correspondant 13, 13'. A l'opposé de la tête de vissage 19, est vissé sur l'extrémité filetée 18a l'axe de pivotement 21 d'une poignée de manoeuvre 22. L'axe 21 est excentré sur la tête 22a en sorte de faire office de came lors de l'actionnement de la poignée 22. Entre ladite tête 22a et la bague de protection 20' est intercalée une bague d'appui 23 dont la face 23a tournée vers la poignée 22 présente une courbure concave qui est complémentaire de la courbure convexe de la tête 22a. Sur la figure 2, on a représenté tous ces différents éléments qui composent le système de serrage 11 séparés les uns des autres. Par contre pour réaliser le blocage en position de la partie arrière 8 sur la partie avant 7, il faut considérer que tous ces éléments sont rapprochés, les portions cylindriques 20a des deux bagues de protection 20, 20' étant logées à l'intérieur des évidements des oeillets 13, 13', la tête de vissage 19 étant appliquée sur la face extérieure de la bague de protection 20, la bague d'appui 23 étant appliquée sur la face externe de la bague de protection 20', l'axe 21 de la poignée 22 étant vissé jusqu'à ce que la tête 22a soit appliquée sur la face concave de la bague d'appui 23. Ce vissage intervient, en mettant en oeuvre la tête de vissage 19, alors que le bras 22b se trouve dans la position initiale telle que représentée en pointillés sur la figure 2. Lorsqu'on fait pivoter l'axe 21 sur lui-même en actionnant le bras 22b dans le sens de la flèche F, on repousse, grâce à l'excentration de l'axe 21 la bague d'appui 23 et corrélativement l'oeillet 13' qui se rapproche de l'oeillet 13, refermant en tout ou partie l'encoche 12. Eventuellement l'encoche 12 a son extrémité qui peut être prolongée par une encoche transversale facilitant la déformation de l'extrémité avant 8a de la partie arrière 8.

Comme indiqué ci-dessus, les portions avant 7 et arrière 8 sont de section carrée, de préférence avec deux côtés sensiblement verticaux. L'encoche 12 est formée selon l'une des arêtes supérieures 81 de la partie arrière 8. Les trous débouchants 10 de préréglage sont formés sur la face latérale 8a de la partie arrière 8. Ils sont aptes à être pénétrés par l'ergot 9 qui est monté, mû par ressort, sur la face supérieure 7b de la partie avant 7 dans l'alignement des trous débouchants 10.

Il est souhaitable de limiter au maximum le jeu entre les faces extérieures de la partie avant 7 et les faces intérieures de la partie arrière 8. Ce jeu peut être de l'ordre du millimètre.

Lors du coulissement, il se produit inévitablement des frottements susceptibles de former des rayures ou des défauts. Pour éviter cet inconvénient, on retient une partie avant 7 ayant une surface extérieure dure et ayant un coefficient de frottement le plus bas possible. De préférence la partie avant 7 est formée dans un acier chromé.

Dans un exemple précis de réalisation, donné à titre non exhaustif, le tube de direction 2 et le tube de selle 3 ont un diamètre extérieur de l'ordre de 30 mm. La partie avant 7 du tube supérieur 5 est de section carrée, comme illustrée aux figures, chaque côté dudit carré faisant de l'ordre de 40 mm. La partie arrière 8 du tube supérieur 5 est de section carrée, avec intérieurement chaque côté faisant de l'ordre de 41 à 42 mm. La longueur L de réglage est de l'ordre de 10 cm. La longueur D de l'encoche 12 est de l'ordre de 6 cm, la largeur de l'ordre de 7 mm. La distance H séparant l'axe des zones de raccordement 15, 16 respectivement de la partie arrière 8 du tube supérieur 5 et des haubans arrière 17 est de l'ordre de 10 à 12 cm. L'axe de la zone de raccordement 24 du tube diagonal 6 sur la partie arrière 8 est sensiblement à l'aplomb de l'extrémité 25 de l'encoche 12. Le tube supérieur 5 est incliné d'un angle α de l'ordre de 10° par rapport à l'horizontale.

## Revendications

1. Bicyclette dont le cadre (1) comporte :
a) un tube de direction (2),
b) un tube de selle (3) dont l'extrémité inférieure (3a) est reliée à la boîte de pédalier (4) et
c) un tube supérieur (5) en deux parties à savoir une partie mâle (7), de préférence avant, et une partie femelle (8), de préférence arrière, montées coulissantes l'une par rapport à l'autre sur une longueur limitée, par exemple de 10cm, le tube supérieur (5) s'étendant strictement entre le tube de direction (2) et le tube de selle (3),
**caractérisée en ce qu'**un tube diagonal (6) s'étend entre la boîte de pédalier (4) et la partie femelle (8) arrière du tube supérieur (5) et **en ce que** le cadre (1) comprend des moyens de blocage des deux parties mâle (7) et femelle (8) suivant une pluralité de positions déterminées d'utilisation, la partie mâle (7) et la partie femelle (8) du tube supérieur (5) ayant une section non circulaire et présentant au moins une arête.

2. Bicyclette selon la revendication 1, dans laquelle le tube supérieur (5) a une section carrée, notamment avec deux côtés sensiblement verticaux.

3. Bicyclette selon l'une des revendications 1 ou 2, dans laquelle les moyens de blocage des deux parties mâle (7) et femelle (8) du tube supérieur (5), dans une position déterminée, comprennent un ergot de positionnement (9), mû par ressort, monté sur la partie mâle (7) du tube supérieur (5) ainsi qu'une pluralité de trous débouchants (10) formés dans la partie femelle (8) du tube supérieur (5), dans l'alignement de l'ergot de positionnement (9).

4. Bicyclette selon l'une des revendications 1 ou 2, dans laquelle les moyens de blocage interviennent au niveau d'une arête du tube supérieur.

5. Bicyclette selon l'une des revendications 1 à 4, dans laquelle l'extrémité (8a) de la partie femelle (8) du tube supérieur (5) comporte une encoche longitudinale (12) et est équipée de deux oeillets (13, 13') fixés de part et d'autre de ladite encoche (12) et en ce que les moyens de blocage comportent un système de serrage (11), notamment à came, apte à réaliser le rapprochement des deux oeillets (13,13').

6. Bicyclette selon la revendication 5, dans laquelle l'encoche longitudinale (12) est réalisée selon une arête de la partie femelle du tube supérieur.

7. Bicyclette selon l'une des revendications 5 ou 6, dans laquelle l'encoche longitudinale (12) a une longueur D de l'ordre de 4 à 8 cm et une largeur d de l'ordre de 5 à 9 mm.

8. Bicyclette selon l'une des revendications 1 à 7, dans laquelle la partie mâle (7) du tube supérieur (5) présente une surface extérieure à faible coefficient de frottement, par exemple étant en acier chromé.

9. Bicyclette selon l'une des revendications 1 à 8, dans laquelle la partie mâle (7) du tube supérieur (5) pénètre constamment dans la partie femelle (8) sur une longueur H d'au moins 15 cm.

10. Bicyclette selon la revendication 9, dans laquelle la partie femelle (8) du tube supérieur (5) comporte une fenêtre de visualisation de la longueur H de la partie mâle (7) ayant pénétré dans la partie femelle (8).

11. Bicyclette selon l'une des revendications 1 à 10, dans laquelle la partie avant (7) du tube supérieur est reliée au tube de direction (2) dans sa portion médiane, voire inférieure, tandis que la partie arrière (8) du tube supérieur (5) est reliée au tube de selle (3) dans une zone située à distance du raccordement des deux haubans arrière, par exemple à une distance (K) de l'ordre de 8 à 12 cm.

12. Bicyclette selon l'une des revendications 1 à 11, dans laquelle le tube supérieur (5) est en oblique, étant relevé vers l'avant d'une angle α, faisant de l'ordre de 5 à 15° et le tube diagonal (6) a une courbure convexe.

## Claims

1. A bicycle, the frame (1) whereof includes:
a) a steering tube (2),
b) a seat tube (3), the lower end (3a) whereof is connected to the bottom bracket (4) and
c)an upper tube (5) in two parts, to wit a male part (7), preferably at the front, and a female part (8), preferably at the rear, assembled so as to slide relative to one another over a limited length, for example 10 cm, the upper tube (5) extending strictly between the steering tube (2) and the seat tube (3), **characterized in that** a diagonal tube (6) extends between the bottom bracket (4) and the rear, female part (8) of the upper tube (5) and **in that** the frame (1) includes means for blocking the two, male (7) and female (8) parts according to a plurality of predetermined operating positions, the male part (7) and the female part (8) of the upper tube (5) having a non-circular cross-section with at least one acute edge.

2. A bicycle according to Claim 1, wherein the upper tube (5) has a square cross-section, particularly with two substantially vertical sides.

3. A bicycle according to one of Claims 1 or 2, wherein the means for blocking the two, male (7) and female (8) parts of the upper tube (5) in a predetermined position, consist of a positioning lug (9), driven by a spring, mounted on the male part (7) of the upper tube (5), as well as a plurality of through-holes (10) made in the female part (8) of the upper tube (5), aligned with the positioning lug (9).

4. A bicycle according to one of Claims 1 or 2, wherein the blocking means occur at an edge of the upper tube.

5. A bicycle according to one of Claims 1 through 4, wherein the end (8a) of the female part (8) of the upper tube (5) has a longitudinal notch (12) and is equipped with two eyelets (13, 13') attached to either side of said notch (12) and in that the blocking means include a clamping system (11), particularly cam-operated, capable of bringing the two eyelets (13, 13') closer together.

6. A bicycle according to Claim 5, wherein the longitudinal notch (12) is made along an edge of the female part of the upper tube.

7. A bicycle according to one of Claims 5 or 6, wherein the longitudinal notch (12) has a length D on the order of 4 to 8 cm and a width d on the order of 5 to 9 mm.

8. A bicycle according to one of Claims 1 through 7, wherein the male part (7) of the upper tube (5) has an outer surface with a low friction coefficient, being made of chrome-plated steel for example.

9. A bicycle according to one of Claims 1 through 8, wherein the male part (7) of the upper tube (5) penetrates constantly into the female part (8) over a length H of at least 15 cm.

10. A bicycle according to Claim 9, wherein the female part (8) of the upper tube (5) includes a window for displaying the length H of the male part (7) having penetrated into the female part (8).

11. A bicycle according to one of Claims 1 through 10, wherein the front part (7) of the upper tube is connected to the steering tube (2) in its median, or possibly lower portion, while the rear part (8) of the upper tube (5) is connected to the seat tube (3) in the area located away from the junction with the two rear struts, for example at a distance (K) on the order of 8 to 12 cm.

12. A bicycle according to one of Claims 1 through 11, wherein the upper tube (5) is oblique, being raised toward the front by an angle α measuring on the order of 5 to 15°, and the diagonal tube (6) has convex curvature.

## Patentansprüche

1. Fahrrad, dessen Rahmen (1) umfaßt:
a) ein Steuerrohr (2),
b) eine Sattelstütze (3), deren unteres Ende (3a) mit dem Tretlagergehäuse (4) verbunden ist, und
c) ein Oberrohr (5) aus zwei Teilen, nämlich einem - vorzugsweise vorderen - Einsteckteil (7) und einem - vorzugsweise hinteren - Aufnahmeteil (8), die über eine begrenzte Länge, beispielsweise von 10 cm, verschieblich zueinander angebracht sind, wobei das Oberrohr (5) genau zwischen dem Steuerrohr (2) und der Sattelstütze (3) verläuft,
**dadurch gekennzeichnet, daß** ein Diagonalrohr (6) zwischen dem Tretlagergehäuse (4) und dem hinteren Aufnahmeteil (8) des Oberrohrs (5) verläuft und daß der Rahmen (1) Mittel zum Blockieren der beiden Einsteck- (7) und Aufnahmeteile (8) in einer Vielzahl von bestimmten Einsatzpositionen umfaßt, wobei der Einsteckteil (7) und der Aufnahmeteil (8) des Oberrohrs (5) einen nicht kreisförmigen Querschnitt haben und wenigstens eine Kante aufweisen.

2. Fahrrad nach Anspruch 1, wobei das Oberrohr (5) einen quadratischen Querschnitt, insbesondere mit zwei im wesentlichen vertikalen Seiten aufweist.

3. Fahrrad nach einem der Ansprüche 1 oder 2, wobei die Mittel zum Blockieren der beiden Einsteck- (7) und Aufnahmeteile (8) des Oberrohrs (5) in einer bestimmten Position einen federbewegten, an dem Einsteckteil (7) des Oberrohrs (5) angebrachten Positionierungsstift (9) sowie eine Vielzahl von durchgehenden Löchern (10), die in dem Aufnahmeteil (8) des Oberrohrs (5), in der Fluchtlinie des Positionierungsstiftes (9) ausgebildet sind, umfassen.

4. Fahrrad nach einem der Ansprüche 1 oder 2, wobei die Blockiermittel im Bereich einer Kante des Oberrohrs zum Einsatz kommen.

5. Fahrrad nach einem der Ansprüche 1 bis 4, wobei das Ende (8a) des Aufnahmeteils (8) des Oberrohrs (5) eine Längsnut (12) aufweist und mit zwei auf beiden Seiten der Nut (12) befestigten Ösen (13, 13') ausgestattet ist und daß die Blockiermittel ein Spannsystem (11), insbesondere mit Nocken, umfassen, das geeignet ist, das Annähern der beiden Ösen (13, 13') zu vollziehen.

6. Fahrrad nach Anspruch 5, wobei die Längsnut (12) entlang einer Kante des Aufnahmeteils des Oberrohrs ausgebildet ist.

7. Fahrrad nach einem der Ansprüche 5 oder 6, wobei die Längsnut (12) eine Länge D in der Größenordnung von 4 bis 8 cm und eine Breite d in der Größenordnung von 5 bis 9 mm aufweist.

8. Fahrrad nach einem der Ansprüche 1 bis 7, wobei der Einsteckteil (7) des Oberrohrs (5) eine Außenfläche mit geringem Reibungskoeffizienten aufweist, wobei er beispielsweise aus verchromtem Stahl besteht.

9. Fahrrad nach einem der Ansprüche 1 bis 8, wobei der Einsteckteil (7) des Oberrohrs (5) ständig über eine Länge H von wenigstens 15 cm in den Aufnahmeteil (8) eindringt.

10. Fahrrad nach Anspruch 9, wobei der Aufnahmeteil (8) des Oberrohrs (5) ein Sichtfenster für die Länge H des Einsteckteils (7), die in den Aufnahmeteil (8) eingedrungen ist, aufweist.

11. Fahrrad nach einem der Ansprüche 1 bis 10, wobei der vordere Teil (7) des Oberrohrs mit dem Steuerrohr (2) in seinem mittleren, sogar unteren Abschnitt verbunden ist, während der hintere Teil (8) des Oberrohrs (5) mit der Sattelstütze (3) in einem Bereich verbunden ist, der sich im Abstand von der Verbindung der beiden hinteren Streben, beispielsweise in einem Abstand (K) in der Größenordnung von 8 bis 12 cm befindet.

12. Fahrrad nach einem der Ansprüche 1 bis 11, wobei das Oberrohr (5) schräg verläuft, wobei es um einen Winkel α, der in der Größenordnung von 5 bis 15° liegt, nach vorne gehoben ist, und das Diagonalrohr (6) eine konvexe Krümmung aufweist.
